# EUROPEAN PATENT SPECIFICATION

(11) **EP 0 573 233 B1**
(45) Date of publication and mention of the grant of the patent: **16.07.1997**
(21) Application number: 93304193.1
(22) Date of filing: 28.05.1993
(51) Int. Cl.: B60T 13/563, B60T 13/57

(54) **Improvements in pneumatically-operated boosters for vehicle braking systems**
Pneumatische Kraftverstärker für Fahrzeugbremsanlagen
Amplificateur pneumatique pour systèmes de freinage de véhicules

(30) Priority: 04.06.1992 GB 9211850
(43) Date of publication of application: 08.12.1993
(73) Proprietor: LUCAS INDUSTRIES public limited company, Solihull, West Midlands B90 4LA (GB)
(72) Inventor: Byrnes, Sean, Kings Heath, Birmingham B14 7ND (GB)
(74) Representative: Spall, Christopher John

(56) References cited:
- EP-A- 0 173 338
- DE-A- 3 505 626
- US-A- 4 716 814

## Description

This invention relates to improvements in pneumatically-operated boosters for vehicle braking systems.

It is known in the prior art, for example United States patent number 4,716,814, to provide a pneumatically operated booster of the kind comprising a wall which is movable in a booster housing when subjected to pressure differential in order to augment a brake-applying force from a pedal which, in turn, is applied to a master cylinder, a valve mechanism being contained within a sleeve projecting from one end of the housing, and a reaction mechanism which acts upon an output member for operating said master cylinder.

Problems exist in installing boosters of the kind set forth in the limited space available in engine compartments of vehicles. It is therefore desirable to provide boosters which are radially compact and which, in combination with an hydraulic master cylinder, are also compact axially.

The present invention is therefore concerned with improvements aimed at reducing the radial and axial dimensions of a booster of a given capacity.

According to one aspect of our invention we provide a pneumatically operated booster for a vehicle braking system comprising a wall which is movable in a booster housing when subjected to pressure differential in order to augment a brake-applying force from a pedal which, in turn, is applied to a master cylinder, a valve mechanism contained within a sleeve, projecting from one end of the housing, and a reaction mechanism which acts on an output member for operating said master cylinder,
characterised in that said sleeve comprises inner and outer coaxial members of which the inner member acts as a retainer to lockingly retain on the outer member the inner end of said movable wall and to provide a coupling with a hub member defining a housing for said valve mechanism, said valve mechanism being assembled into the housing by means of a central core the core defining an abutment for a return spring and a bore forming a support for said reaction mechanism.

Preferably the core has a spragged engagement with the sleeve.

When the core is positioned in the booster the retracted position for the components of the booster and the valve mechanism is determined by a back stop with which a part of the valve mechanism is adapted to cooperate.

Providing the central core makes the booster more Compact axially. The central core is surrounded by the sleeve to which inner ends of spaced movable walls are sealingly connected.

A back stop comprises a member or part through which the spring force and all other loads are transferred onto the housing.

The back stop may comprise a portion of the wall of the housing itself, with a piston forming part of the valve mechanism cooperating with the back stop through a radial key.

In such a construction the portion of the housing with which the key cooperates comprises a radial web interconnecting inner and outer radial flanges of greater and smaller diameters.

In a modification the back stop may comprise a separate member cooperating with, and attached to, the internal surface of the housing of the booster.

According to yet another aspect of our invention in a tandem pneumatically-operated booster for vehicle braking systems comprising a booster housing, a partition dividing the housing into front and rear components, a first movable wall dividing the front component into a first front chamber of constant pressure and a first rear chamber of variable pressure, a second movable wall dividing the rear compartment into a second front chamber of constant pressure and a second rear chamber of variable pressure, a sleeve located within the housing and sealingly and slidably extending through the partition, and a hub member coupled at its inner end to the sleeve and with which it defines an assembly, the hub member projecting rearwardly from the booster housing, and defining a valve housing for a pedal-operated valve mechanism for controlling operation of the booster, and a return spring acting on the hub member to urge it towards the abutment and said first front chamber is in permanent communication with the second front chamber through the interior of the assembly and a port in the assembly, characterised in that the sleeve comprises inner and outer co-axial members of which the inner member acts as a retainer lockingly to retain on the outer member the inner end of the movable wall and to provide a coupling with the hub member, and an abutment is defined between the hub member and the booster housing to define the retracted position of said valve mechanism.

Some embodiments in accordance with our invention are illustrated in the accompanying drawings in which:-
Figure 1 is a longitudinal section through a tandem booster of the vacuum-suspended type;
Figure 2 is a longitudinal section through a modified valve mechanism for use in the booster of Figure 1;
Figure 3 is a section through the valve mechanism of the booster of Figure 1 but showing a modification; and
Figure 4 illustrates a modification of the key back stop illustrated in Figure 3.

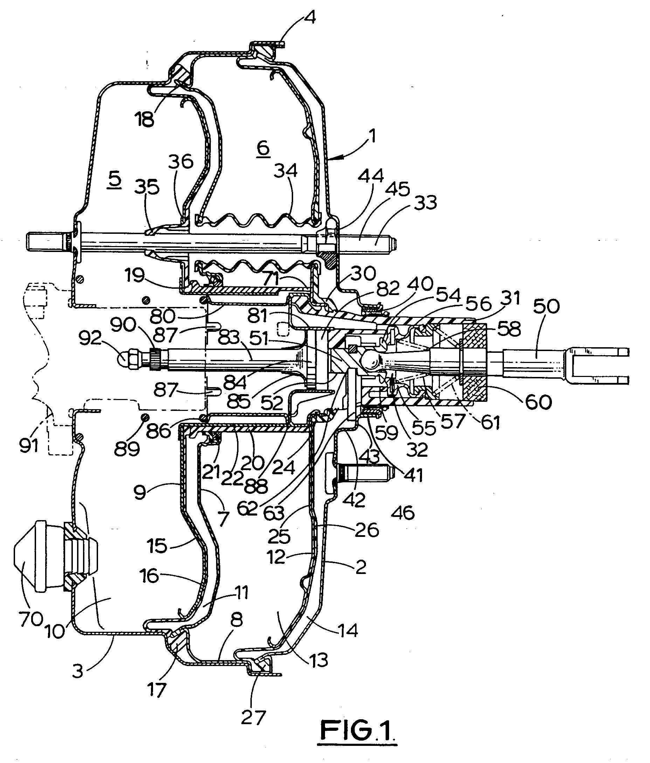

The vacuum-suspended tandem pneumatic booster illustrated in Figure 1 of the drawings comprises a housing 1 comprising a pair of complementary shells 2 and 3, each of dished outline. The two shells are secured together at their peripheral edges by a coupling 4, suitably defined by a crimping or similar operation. The interior of the housing is divided into front and rear compartments 5 and 6 by means of an annular partition 7. The partition 7 has a peripheral skirt 8 which lies against a complementary portion of the wall of the shell 3 and is directed towards the coupling ring 4.

A first movable wall 9 divides the front compartment 5 into a front chamber 10 of constant pressure and a rear variable pressure chamber 11. Similarly a second movable wall 12 divides the rear compartment into a front constant pressure chamber 13, and a rear variable pressure chamber 14.

The movable wall 9 comprises a piston 15 supported by a rolling diaphragm 16. An annular bead 17 at the outer peripheral edge of the diaphragm 16 provides a seal between the shell 3 and the partition 7, with the bead 17 retained in position by an annular projection 18 of double thickness which projects forwardly from, and diverges outwardly with respect to, the partition 7. An annular bead 19 at the radially innermost end of the diaphragm 16 is secured by a cylindrical central sleeve 20 which is adapted to slide through an annular seal 21 at the inner end of the partition 7, by means of an internal sleeve member 22 co-axial with, and located within, the sleeve 20. The sleeve 20 and the sleeve member 22 define a sleeve sub-assembly.

In a modification instead of being a separate component, the internal sleeve member 22 is deep drawn from the material of the piston 15 to form a rearwardly directed cylindrical extension.

The movable wall 12 comprises a piston 25 abutting against the sleeve 20 and the sleeve member 22 is secured to a central hub member 31 by a coupling 24 suitably by a crimping or similar operation. The piston 25 is supported by a rolling diaphragm 26 and an annular bead 27 at the outer peripheral edge of the diaphragm 26 forms a seal between complementary parts of the annular flange 8 of the partition 7, and the walls of the shells 2 and 3 where they are connected by the coupling 4. An axially extending rearwardly directed bead 30 at the inner end of the diaphragm 26 forms a sealing connection with the external surface of a central hub member 31 which projects rearwardly from the shell 2 and defines a housing for a valve mechanism 32 for controlling operation of the booster.

The movable walls 9 and 12 are adapted to be assembled to the central sleeve 20 and are then locked in position by inserting the sleeve member 22 through the sleeve 20 so that the inner end of the wall 9 is trapped between the end of the sleeve 20 and an outwardly directed flange at the outer end of the sleeve member 22. An inwardly directed radial flange at the inner end of the sleeve member 22 is then connected to the hub member 31 by the coupling 24, suitably by crimping. This forms an assembly comprising the two movable walls 9 and 12 and the hub member 31 which defines a housing for the valve mechanism 32.

A tie-rod 33 extends axially through the housing and is connected adjacent to axially projecting opposite end portions to the two shells 2 and 3. The tie-rod 33 is adapted for mounting the booster in an engine compartment and for providing a mounting for a master cylinder so that it can be carried direct from a bulk head through the tie-rod 33.

The tie-rod 33 projects through a convoluted bellows 34 of which opposite ends are sealed around aligned openings in the movable wall 12 and the fixed partition 7, and with the movable wall 9 connected to the tie-rod 33 by means of a sealing boot 35 which is integral with and projects forwardly from the diaphragm 16 and through a complementary opening 36 in the piston 15. We therefore provide a one-piece member comprising the diaphragm 16 and the boot 35.

The hub member 31 is of stepped outline and projects rearwardly from the housing through a sealed opening 40 in which it is axially movable through a short distance. The opening 40 is defined within a flange portion 41 of smaller diameter at the outer end of an inner portion 42 of greater diameter, the two portions 41 and 42 being interconnected by means of a radial web 43. The external diameter of the flange portion 42 is of a suitable diameter as to be received in a complementary opening in the bulkhead of the vehicle against which an annular bearing face 44 is adapted to be clamped by means of nuts screwed onto a threaded portion 45 of the tie-rod 33 and a threaded stud 46 projecting rearwardly from the shell 2 in a diametrically opposed position with respect to the threaded portion 45.

The valve mechanism 32 comprises a pedal-operated rod 50 coupled at its inner end to a poppet valve member 51 comprising a piston which is guided to slide in a axial bore 52 in the hub member 31. The valve member 51 is formed at its outer most end with a valve seating 54 of part-spherical outline. An annular valve head 55 at the inner end of a flexible valve member 56 is urged by means of a spring 57 abutting against a shoulder 58 on the rod 50 towards the valve head 54 and an annular valve head 59 on the hub member 31. The peripheral edge of the valve head 55 is provided with a plurality of angularly spaced axially extending ribs 49 which facilitate movement of the bead 55 within the hub member 31 and centralise it with respect to the valve member 51. Air is admitted into the valve device 32 through a filter 60 in the outer end of the hub member 31 and which forms an abutment for a conical helical spring 61 acting as a return spring for the rod 50 and to hold the valve member 56 against an abutment in the hub member 31.

The poppet valve member 51 is provided with a radial slot 62, and a key 63 fitted into the slot 62 projects radially from the valve member 51. The key 63 is so positioned as to allow free displacement of the valve member 51 with respect to the hub member 31 during operation of the booster, but to abut against the shell 2 on release of the pedal to define a balanced position for the valve mechanism 32.

The two constant pressure chambers 10 and 13 are connected to vacuum, suitably the inlet manifold of a vehicle, through a non-return valve connection 70 in the wall of the shell 3 with the two chambers 10 and 13 permanently interconnected through the centre of the sleeve 20 and a port 71 at the inner end of the sleeve 20. In a normal brakes off position the variable pressure chambers 11 and 14 are held at a slight atmospheric pressure through the interior of the boot 34 and the valve mechanism 32 since, in such a position, the valve head 55 is just contacting the seating 59 by the engagement of the seating 54 with the valve head 55 in the position determined by the engagement of the key 63 with the shell 2.

A pressed metal core 80 is disposed within the bore of the sleeve member 22. The core 80 is of stepped outline having a rearwardly directed bore portion 81 of reduced diameter forming a support for a reaction disc 82 through which the piston 51 acts on a axially extending output member 83. The output member 83 has an enlarged head 85 which is trapped between the reaction disc 82 and a retainer 84 having a spragged engagement within the bore of the reduced diameter portion 81.

The core 80 is located in the sleeve member 22 at two axially spaced positions defined by circumferentially extending ribs 86 and 88 on the core. The innermost rib 86 is discontinuous being formed by arcuate regions defined between angularly spaced notches 87 and forms an abutment for a return spring 89 which holds the core 80 in a retracted position in abutment against the hub member 31. The retracted position for the components is therefore determined by the engagement of the key 63 with the shell 2.

The output rod 83 has a splined portion 90 adjacent to its outer end for non-rotational keying engagement with a complementary input component member of a master cylinder of the overhung type of which the body 91 shown in chain dotted outline is sealingly received in the inner end of the housing 1 of the booster. The component member of the master cylinder can be set by rotation of a rotatable member 92 at the free end of the rod 83.

In a preferred method of assembling the booster, the movable wall 9 is fitted into the shell 3 with the sleeve 20 encircling the sleeve member 22 to trap a thickening at the inner edge of the diaphragm 16 against the plate 9, and with the tie-rod 33 extending through the boot 35. The sleeve 20 and the sleeve member 22 are then connected together suitably by welding. The partition 7 is then inserted into the open end of the shell 3 with the seal 21 sealingly engaging with the outer surface of the sleeve 20, and the partition 7 trapping a thickening at the outer of the diaphragm 15 against the wall of the shell 3. The core 80 and the hub member 31 containing the valve mechanism 32 are next inserted into the open end of the shell 3 with the core 80 slidingly received within the sleeve member 22, and the sleeve member 22 secured to the hub member 31, suitably by crimping. The movable wall 12 is fitted into the shell 3 with a thickening at the inner edge of the diaphragm 26 secured to the sleeve member 22 and the hub member 31. After the shell 2 is fitted into the open end of the shell 3 with the bead 27 clamped between complementary parts of the two shells 3 and 2 and the flange 8, the coupling ring 4 is fitted to the housing to secure the shells 3 and 2 together, thereby completing the assembly.

The assembly of the master cylinder 91 and the booster is therefore axially compact.

In operation of the booster the valve seat 59 is already in abutment with the valve head 55 as the valve mechanism 32 is in the balanced position due to the engagement of the key 63 with the radial web 43. A brake-applying force applied to the rod causes the seating 54 to separate from the valve head 55 with the result that air is admitted into the two rear compartments 11 and 14 to energise the booster. Thereafter the booster operates in a known manner with the two movable walls 9 and 12 moving in tandem to augment the force applied to the output member 83 in response to the pedal-operating force.

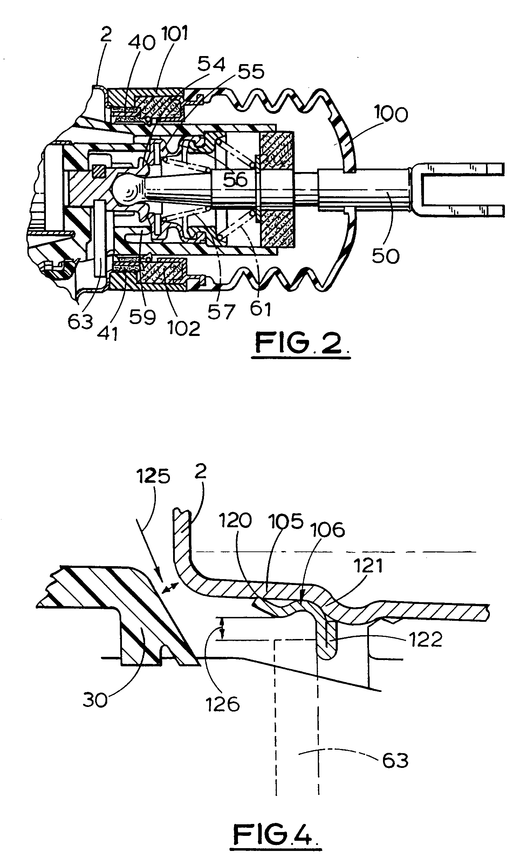

In the modified valve mechanism illustrated in Figure 2 of the accompanying drawings a sealing boot 100 provides a seal between the pedal-operated rod 50 and an annular collar 101 mounted on the shell 2. The collar 101 also forms a mounting for a radial air inlet filter 102 through which air enters the interior of the boot 100, and hence the booster. We have found that admission of air in this direction makes the booster more silent in operation.

The construction and operation of the valve mechanism is otherwise the same as that of Figure 1 and corresponding reference numerals have been applied to corresponding parts.

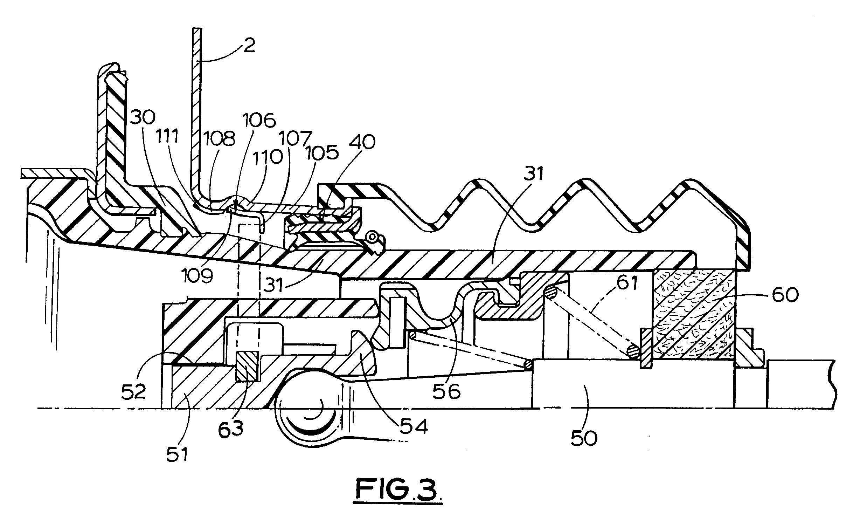

In order to install the booster of Figure 1 in an opening in the bulkhead which is of smaller diameter, and thereby conserve space in a radial direction, as illustrated in Figure 3 of the drawings, the shell 2 has a single rearwardly directed annular flange 105 which tapers in a direction away from the shell 2, and a separate key back stop 106 is provided for the key 63 in place of the radial web 43. As illustrated the back stop 106 comprises a radial flange 107 extending inwardly from the outer end of a sprag ring 108 having a plurality of angularly spaced teeth 109 which are received in a circumferentially extending recess 110 in the inner face of the shell 2. The ring 108 is held against axial movement in the opposite direction by the engagement of an outwardly directed arcuate portion 111 with the curved region between the shell 2 and the flange 105.

In a modification shown in Figure 4 of the accompanying drawings, the key back stop 106 comprises a spring member 120 of flattened S outline having a spring loaded engagement with the interior of the annular flange 105. The free inner end of the spring member 120 is spragged into the wall of the flange 105 to hold the member 120 in abutment against a rib 121 pressed into the shell 2. A radial flange 122 of double thickness projects inwardly from the inner end of the member 120 to define the abutment for the key 63.

Moving the key back stop 106 rearwardly with respect to the shell 2 in comparison with the arrangement of Figure 3 increases the air flow between the bead 30 and the shell 2 since the passage 125 defined therebetween is not obstructed in any way by the back stop 106 as in the embodiment of Figure 3.

In addition, the use of a radial flange 122 of double thickness increases the strength of the abutment for the key. This enables us to increase the radial clearance 126 between the key 63 and the member 120, in turn reducing any tendency for the key 63 to foul against the abutment stop 106.

## Claims

1. A pneumatically operated booster for a vehicle braking system comprising a wall (9,12) which is movable in a booster housing (1) when subjected to pressure differential in order to augment a brake-applying force from a pedal which, in turn, is applied to a master cylinder (16), a valve mechanism contained within a sleeve (20,22,31), projecting from one end of the housing, and a reaction mechanism (82) which acts on an output member (83) for operating said master cylinder,
characterised in that said sleeve (20,22,31) comprises inner and outer coaxial members (20,22) of which the inner member (22) acts as a retainer to lockingly retain on the outer member (20) the inner end of said movable wall (9,12) and to provide a coupling with a hub member (31) defining a housing for said valve mechanism (32), said valve mechanism being assembled into the housing by means of a central core (80), the core defining an abutment for a return spring (89) and a bore (81) forming a support for said reaction mechanism (82).

2. A booster according to claim 1, characterised in that the core (80) has a spragged engagement with the sleeve (20, 22, 31).

3. A booster according to any preceding claim, in which the booster is of tandem construction including spaced movable walls (9, 12), characterised in that the central core (80) is surrounded by the sleeve (20, 22, 31).

4. A booster according to claim 1 or claim 2, characterised in that the retracted position for the components of the booster and the valve mechanism is determined by a back stop (41) with which a part of the valve mechanism (32) is adapted to cooperate.

5. A booster according to claim 4, characterised in that the back stop comprises a portion (41) of the wall of the housing (1) itself, with a piston (51) forming part of the valve mechanism (32) cooperating with the back stop through a radial key (63).

6. A booster according to claim 5, characterised in that the portion (41) of the housing with which the key (63) cooperates comprises a radial web interconnecting inner and outer radial flanges (41, 42) of greater and smaller diameters.

7. A booster according to claim 5, characterised in that the back stop comprises a separate member (106) cooperating with, and attached to, the internal surface of the housing of the booster.

8. A tandem pneumatically-operated booster for vehicle braking systems comprising a booster housing (1), a partition (7) dividing the housing into front and rear components (5, 6), a first movable wall (9) dividing the front component (5) into a first front chamber (10) of constant pressure and a first rear chamber (11) of variable pressure, a second movable wall (12) dividing the rear compartment (6) into a second front chamber (13) of constant pressure and a second rear chamber (14) of variable pressure, a sleeve (20, 22) located within the housing and sealingly and slidably extending through the partition (7), and a hub member (31) coupled at its inner end to the sleeve (20, 22) and with which it defines an assembly, the hub member projecting rearwardly from the booster housing (1), and defining a valve housing for a pedal-operated valve mechanism (32) for controlling operation of the booster, and a return spring (89) acting on the hub member (31) to urge it towards the abutment (43) and said first front chamber (10) is in permanent communication with the second front chamber (13) through the interior of the assembly (20, 22, 31) and a port (71) in the assembly (20, 22, 31), characterised in that the sleeve (20,22) comprises inner (20) and outer (22) co-axial members of which the inner member (22) acts as a retainer lockingly to retain on the outer member (70) the inner end of the movable wall (9,12) and to provide a coupling with the hub member (31), and an abutment (43) is defined between the hub member (31) and the booster housing (1) to define the retracted position of said valve mechanism (32).

9. A tandem booster according to claim 8, characterised in that the spring (89) acts on a core (80) disposed within the bore of the sleeve (20, 22), the core (80) forming a support for a reaction disc (82) through which the pedal acts on the output member (83).

## Patentansprüche

1. Pneumatischer Kraftverstärker für eine Fahrzeugbremsanlage mit einer Wand (9, 12), die in einem Kraftverstärkergehäuse (1) bei Einwirken einer Druckdifferenz beweglich ist, um eine Bremsbetätigungskraft von einem Pedal zu verstärken, die wiederum auf einen Hauptbremszylinder (16) wirkt, einem in einer aus einem Ende des Gehäuses ragenden Buchse (20, 22, 31) angeordneten Ventilmechanismus und einem Reaktionsmechanismus (82), der auf ein Ausgangselement (83) zum Betätigen des Hauptbremszylinders wirkt,
dadurch gekennzeichnet, daß die Buchse (20, 22, 31) innere und äußere koaxiale Elemente (20, 22) aufweist, von denen das innere Element (22) als Halterung wirkt, um das innere Ende der beweglichen Wand (9, 12) am äußeren Element (20) zu befestigen und um eine Kopplung mit einem ein Gehäuse für den Ventilmechanismus (32) begrenzendes Nabenelement (31) bereitzustellen, wobei der Ventilmechanismus mittels eines zentralen Kerns (80) in das Gehäuse eingebaut wird, der ein Widerlager für eine Rückholfeder (89) sowie einen Durchlaß (81), der eine Führung für den Reaktionsmechanismus (82) bildet.

2. Kraftverstärker nach Anspruch 1, dadurch gekennzeichnet, daß der Kern (80) mit der Buchse (20, 22, 31) in Klemmeingriff steht.

3. Kraftverstärker nach einem der vorstehenden Ansprüche, bei dem der Kraftverstärker eine Tandemkonstruktion mit im Abstand zueinander angeordneten beweglichen Wandungen (9, 12) ist, dadurch gekennzeichnet, daß der zentrale Kern (80) von der Buchse (20, 22, 31) umgeben ist.

4. Kraftverstärker nach Anspruch 1 oder 2, dadurch gekennzeichnet, daß die zurückgezogene Stellung der Komponenten des Kraftverstärkers und des Ventilmechanismus durch einen Rückwärtsanschlag (41) bestimmt wird, mit dem ein Teil des Ventilmechanismus (32) zusammenwirkt.

5. Kraftverstärker nach Anspruch 4, dadurch gekennzeichnet, daß der Rückwärtsanschlag einen Abschnitt (41) der Wand des Gehäuses (1) selbst aufweist, wobei ein Kolben (51), der Teil des Ventilmechanismus (32) bildet, über einen radialen Finger (63) mit dem Rückwärtsanschlag zusammenwirkt.

6. Kraftverstärker nach Anspruch 5, dadurch gekennzeichnet, daß der Abschnitt (41) des Gehäuses, mit dem der Finger (63) zusammenwirkt, einen radialen Steg aufweist, der innere und äußere radiale Flansche (41, 42) mit größeren und kleineren Durchmessern verbindet.

7. Kraftverstärker nach Anspruch 5, dadurch gekennzeichnet, daß der Rückwärtsanschlag ein getrenntes Element (106) aufweist, das mit der Innenfläche des Gehäuses des Kraftverstärkers zusammenwirkt und an dieser befestigt ist.

8. Pneumatischer Tandem-Kraftverstärker für Fahrzeugbremsanlagen mit einem Kraftverstärkergehäuse (1), einer Trennwand (7), die das Gehäuse in vordere und hintere Räume (5, 6) teilt, einer ersten beweglichen Wand (9), die den vorderen Raum (5) in eine erste vordere Kammer (10) mit konstantem Druck und eine erste hintere Kammer (11) mit veränderlichem Druck teilt, einer zweiten beweglichen Wand (12), die den hinteren Raum (6) in eine zweite vordere Kammer (13) mit konstantem Druck und eine zweite hintere Kammer (14) mit veränderlichem Druck teilt, einer Buchse (20, 22), die innerhalb des Gehäuses angeordnet ist und sich dichtend und verschieblich durch die Trennwand (7) erstreckt, und einem Nabenelement (31), das an seinem inneren Ende mit der Buchse (20, 22) gekoppelt ist, mit der es eine Baugruppe bildet, wobei das Nabenelement nach hinten aus dem Kraftverstärkergehäuse (1) herausragt und ein Ventilgehäuse für den pedalbetätigten Ventilmechanismus (32) zum Steuern des Betriebs des Kraftverstärkers begrenzt, und einer Rückholfeder (89), die auf das Nabenelement (31) wirkt, um es gegen ein Widerlager (43) zu drücken, und bei dem die erste vordere Kammer (10) über das Innere der Baugruppe (20, 22, 31) und über eine Öffnung (71) in der Baugruppe (20, 22, 31) in ständiger Verbindung mit der zweiten vorderen Kammer (13) steht, dadurch gekennzeichnet, daß die Buchse (20, 22) innere (22) und äußere (20) koaxiale Elemente aufweist, von denen das innere Element (22) als Halterung wirkt, um das innere Ende der beweglichen Wand (9, 12) am äußeren Element (20) zu befestigen und um eine Kopplung mit dem Nabenelement (31) bereitzustellen, und ein Widerlager (43) zwischen dem Nabenelement (31) und dem Kraftverstärkergehäuse (1) gebildet wird, das die zurückgezogene Stellung des Ventilmechanismus (32) begrenzt.

9. Tandem-Kraftverstärker nach Anspruch 8, dadurch gekennzeichnet, daß die Feder (89) auf einen innerhalb der Bohrung der Buchse (20, 22) angeordneten Kern (80) wirkt, wobei der Kern (80) eine Führung für eine Reaktionsscheibe (82) bildet, über die das Pedal auf das Ausgangselement (83) wirkt.

## Revendications

1. Amplificateur pneumatique pour un système de freinage de véhicule comprenant une paroi (9, 12) qui est mobile dans un carter d'amplificateur (1) quand elle est soumise à un différentiel de pression de façon à augmenter une force de freinage provenant d'une pédale qui, à son tour, est appliquée à un maître-cylindre (16), un mécanisme de soupape contenu dans une douille (20, 22, 31), faisant saillie depuis une extrémité du carter, et un mécanisme à réaction (82) qui agit sur un élément de sortie (83) pour faire fonctionner ledit maître-cylindre, caractérisé en ce que ladite douille (20, 22, 31) comprend des éléments coaxiaux intérieur et extérieur (20, 22) dont l'élément intérieur (22) agit comme un logement de retenuepour retenir par verrouillage sur l'élément extérieur (20) l'extrémité intérieure de ladite paroi mobile (9, 12) et pour fournir un couplage avec un élément de moyeu (31) définissant un carter pour ledit mécanisme de soupape (32), ledit mécanisme de soupape étant assemblé dans le carter au moyen d'un noyau central (80), le noyau définissant une butée pour un ressort de rappel (89) et un alésage (81) formant un support pour ledit mécanisme à réaction (82).

2. Amplificateur selon la revendication 1, caractérisé en ce que le noyau (80) se trouve en engagement à roue libre avec la douille (20, 22, 31).

3. Amplificateur selon l'une quelconque des revendications précédentes, dans lequel l'amplificateur présente une construction en tandem incluant des parois mobiles espacées (9, 12), caractérisé en ce que le noyau central (80) est entouré de la douille (20, 22, 31).

4. Amplificateur selon la revendication 1 ou la revendication 2, caractérisé en ce que la position rétractée pour les composants de l'amplificateur et du mécanisme de soupape est déterminée par un taquet d'arrêt (41) avec lequel une partie du mécanisme de soupape (32) est apte à coopérer.

5. Amplificateur selon la revendication 4, caractérisé en ce que le taquet d'arrêt comprend une partie (41) de la paroi du carter (1) lui-même, avec un piston (51) faisant partie du mécanisme de soupape (32) coopérant avec le taquet d'arrêt à travers une clavette radiale (63).

6. Amplificateur selon la revendication 5, caractérisé en ce que la partie (41) du carter avec laquelle la clavette (63) coopère comprend un rebord radial interconnectant des rebords radiaux intérieur et extérieur (41, 42) de diamètres plus grand et plus petit.

7. Amplificateur selon la revendication 5, caractérisé en ce que le taquet d'arrêt comprend un élément séparé (106) coopérant avec, et attaché à, la surface interne du carter de l'amplificateur.

8. Amplificateur pneumatique en tandem pour systèmes de freinage de véhicules comprenant un carter d'amplificateur (1), une séparation (7) divisant le carter en composants avant et arrière (5, 6), une première paroi mobile (9) divisant le composant avant (5) en une première chambre avant (10) sous pression constante et une première chambre arrière (11) sous pression variable, une deuxième paroi mobile (12) divisant le compartiment arrière (6) en une deuxième chambre avant (13) sous pression constante et une deuxième chambre arrière (14) sous pression variable, une douille (20, 22) située dans le carter et s'étendant de façon hermétique et de façon à pouvoir coulisser à travers la séparation (7), et un élément de moyeu (31) couplé à son extrémité intérieure à la douille (20, 22) et avec laquelle il définit un ensemble, l'élément de moyeu faisant saillie vers l'arrière depuis le carter d'amplificateur (1), et définissant un carter de soupape pour un mécanisme de soupape actionne à pédale (32) pour commander le fonctionnement de l'amplificateur, et un ressort de rappel (89) agissant sur l'élément de moyeu (31) pour le pousser vers la butée (43) et ladite première chambre avant (10) est en communication permanente avec la deuxième chambre avant (13) à travers l'intérieur de l'ensemble (20, 22, 31) et un orifice (71) dans l'ensemble (20, 22, 31), caractérisé en ce que la douille (20, 22) comprend des éléments coaxiaux intérieur (20) et extérieur (22) dont l'élément intérieur (22) agit comme un logement de retenue pour retenir par verrouillage sur l'élément extérieur (70) l'extrémité intérieure de la paroi mobile (9, 12) et pour fournir un couplage avec l'élément de moyeu (31), et une butée (43) est définie entre l'élément de moyeu (31) et le carter d'amplificateur (1) pour définir la position rétractée dudit mécanisme de soupape (32).

9. Amplificateur en tandem selon la revendication 8, caractérisé en ce que le ressort (89) agit sur un noyau (80) disposé à l'intérieur de l'alésage de la douille (20, 22), le noyau (80) formant un support pour un disque à réaction (82) à travers lequel la pédale agit sur l'élément de sortie (83).
